Europäisches Patentamt

European Patent Office

Office européen des brevets

(19)

(11)  **EP 1 313 255 A2**

## (12) EUROPEAN PATENT APPLICATION

(43) Date of publication:
   **21.05.2003  Bulletin 2003/21**

(51) Int Cl.⁷: **H04L 5/02**

(21) Application number: **02019952.7**

(22) Date of filing: **05.09.2002**

(84) Designated Contracting States:
   **AT BE BG CH CY CZ DE DK EE ES FI FR GB GR
   IE IT LI LU MC NL PT SE SK TR**
   Designated Extension States:
   **AL LT LV MK RO SI**

(30) Priority: **19.11.2001  US 42554**

(71) Applicant: **ALCATEL
   75008 Paris (FR)**

(72) Inventor: **Bentley, Ronald
   Santa Rosa, California 95405 (US)**

(74) Representative:
   **Dreiss, Fuhlendorf, Steimle & Becker
   Patentanwälte,
   Postfach 10 37 62
   70032 Stuttgart (DE)**

(54)  **Method for distributing operating tones among communication loops**

(57)   A method for distributing a plurality of operating tones among a plurality of communication loops, each respective communication loop of the plurality of communication loops having a respective loop length, includes the steps of: (a) in no particular order: (1) identifying each respective communication loop substantially according to the loop length ranging from longer loop lengths to shorter loop lengths; and (2) identifying each respective operating tone according to frequency ranging from higher frequencies to lower frequencies; and (b) assigning respective operating tones to respective communication loops; longer loop lengths being assigned respective operating tones with a higher priority from the lower frequencies; shorter loop lengths of the plurality of loop lengths being assigned respective operating tones with a higher priority from the higher frequencies.

FIG. 2

**Description**

## BACKGROUND OF THE INVENTION

The present invention is directed to communication distribution networks, and especially to communication loop frequency utilization in such networks.

During setting up, or "training" line cards in a channel bank for distributing operating frequencies among communication loops coupled with the channel bank, various frequencies (i.e., high frequencies and low frequencies) are distributed without particular regard to their employment in the network. Training involves determining which tonesets support communicatons with an acceptable signal-to-noise ratio (SNR) for conditions extant at the time training is carried out.

It is known that attenuation of signals in a twisted pair of wires increases with frequency, and that electromagnetic coupling between adjacent pairs of twisted wires increases with frequency. These two characteristics indicate that that high frequency spectrum is less valuable than low frequency spectrum because high frequency spectrum is most effieciently employed with short loops while low frequency spectrum may be employed with both long loops and short loops. Prior art training algorithms use the entire spectrum that is available (i.e., high frequency and low frequency tones) and seek to assign tone-sets involving the full spectrum to use achieve a desired signal-to-noise ratio (SNR).

A consequence of selecting tone-sets during training substantially with regard for meeting a particular SNR criterion is that low frequency tones may be included in the tone-sets selected without regard to the length of the loop, so that there may be no low frequency tones available for some long lines. Low frequency tones are better able to service long loops than high frequency tones. The prior art practice of focusing substantially on meeting an SNR criterion without regard to whether low frequency tones are used for short loops can (and often does) result in there being fewer low frequency tones available for longer loops that are trained later in the training process. That is, the prior art practice for selecting tone-sets during training results in less-than-efficient employment of the spectrum of frequencies available for a communication distribution network.

There is a need for a method for allocating operating frequencies to communication loops that improves efficient employment of the full spectrum of available operating frequencies.

## SUMMARY OF THE INVENTION

In a communication distribution network, whether the communications involve data or voice or both types of communication, the distribution loop to a customer is commonly terminated at the network side at a channel bank. A channel bank is a device that houses an array of line drivers, or line cards, that provide communication signals to customer communication loops. Usually there is one line card, or line driver, per loop. The end of the loop distal from the line cards/channel bank are terminated in customer terminal equipment such as telephone instruments, personal computer modems, facsimile machines or other communication terminal equipment.

The various customers serviced by a channel bank and connected communication loops expect to receive certain downstream (i.e., from the channel bank to the customer terminal equipment) data rates and certain upstream (i.e., from customer terminal equipment to the channel bank) data rates. The various physical or geographic locations of individual customers result in the various communication loops being of various lengths. It is a well known phenomena of electromagnetic wave propagation that longer lines will experience more loss and consequently will have lower signal-to-noise ratios than shorter lines. Further, on a given particular line, higher frequency signaling experiences more line loss and lower signal-to-noise ratio than lower frequency signaling.

Conventionally, until now, short lines (i.e., shorter communication loops) that are required to support low data rates use a wide spectrum of frequency signaling in order to satisfy their data rate requirements. However, the use of lower frequency signaling on shorter loops gives rise to noise in the low frequency range on long lines (i.e., long communication loops) through such phenomena as cross-talk. As a result, the interference that is imposed upon the long lines at lower frequencies reduces the data capacity of the low frequency spectrum on the long line, perhaps even to the point where communications is not possible on the long line. This situation commonly is encountered in setting up, or "training" line cards in a channel bank.

Because the lower frequency signaling tones, or frequencies, generate less noise, as a practical matter it is the lower frequency tones that are commonly used first in training in order to achieve training of as many line cards/loops as one can before limits of noise, interference or signal-to-noise ratio are reached. A consequence of using the low noise low frequency tones first during training, without regard to the length of the loop with which a given tone is used may (and often does) result in there being no low frequency tones available for some long lines. That is, the preference for low noise low frequency tones for training results in less-than-efficient employment of the spectrum of frequencies available for a communication distribution network.

A method for distributing a plurality of operating tones among a plurality of communication loops, each respective communication loop of the plurality of communication loops having a respective loop length, includes the steps of: (a) in no particular order: (1) identifying each respective communication loop substantially according to the loop length ranging from longer loop lengths to shorter loop lengths; and (2) identifying each respective operating tone according to frequency ranging from higher frequencies to lower frequencies; and (b) assigning respective operating tones to respective communication loops; longer loop lengths being assigned respective operating tones with a higher priority from the lower frequencies; shorter loop lengths of the plurality of loop lengths being assigned respective operating tones with a higher priority from the higher frequencies. Tones may be assigned as tone-sets.

It is an object of the present invention to provide a method for distributing a plurality of operating tones among a plurality of communication loops that improves efficient employment of the full spectrum of frequencies available for operating tones.

Further objects and features of the present invention will be apparent from the following specification and claims when considered in connection with the accompanying drawings, in which like elements are labeled using like reference numerals in the various figures, illustrating the preferred embodiments of the invention.

## BRIEF DESCRIPTION OF THE DRAWINGS

Fig. 1 is a schematic block diagram illustrating a wire interface device coupled for providing communication services to customer premises from a variety of communication networks.

Fig. 2 is a flow diagram illustrating preferred embodiments of the method of the invention.

## DETAILED DESCRIPTION OF THE PREFERRED EMBODIMENT

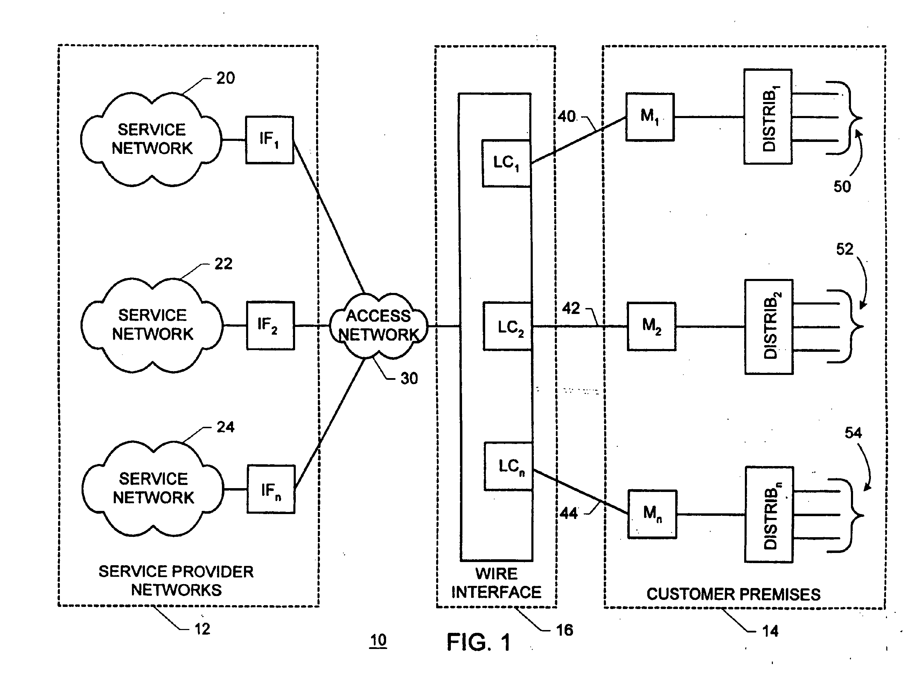

Fig. 1 is a schematic block diagram illustrating a wire interface device coupled for providing communication services to customer premises from a variety of communication networks. In FIG. 1, a communication system 10 includes a service provider network sector 12 and a customer sector 14. A wire interface device 16 connects service provider network sector 12 with customer sector 14.

Service provider network sector 12 includes several service networks 20, 22, 24 and a like number of interface devices $IF_1$, $IF_2$, $IF_n$. The subscript notation "n" is employed here to indicate that there may be any number of service networks 20, 22, 24 and interface devices $IF_n$ within service provider network sector 12. Only three such service networks and associated interface devices are illustrated in FIG. 1 in order to simplify explaining the invention. Service networks 20, 22, 24 may include network service providers such as, by way of illustration and not by way of limitation, Internet service providers (ISP), frame relay services providers and other service providers.

Interface devices $IF_1$, $IF_2$, $IF_n$ are coupled with an access network 30. Access network 30 may be a wired network, an optical network, a wireless network, a "plain old telephone service" (POTS) network or any other communication network that conveys communication signals (including data communications or voice communications or both) from the various service networks 20, 22, 24 in service provider network sector 12. Access network 30 is coupled with wire interface device 16. Wire interface device 16 may be, by way of illustration and not by way of limitation, any interface device configured for receiving communication signals from access network 30 and conveying those communication signals in a wired connection to customer sector 14. The wired connection may be a coaxial cable, a twisted pair or another wired connection. Examples of wire interface devices include digital subscriber line access multiplexer (DSLAM) devices and channel banks. Wire interface device 16 includes line cards $LC_1$, $LC_2$, $LC_n$ for effecting connection with wired connectors 40, 42, 44. The subscript notation "n" is employed here to indicate that there may be any number of line cards $LC_1$, $LC_2$, $LC_n$ within wire interface device 16.

Customer sector 14 includes modem devices $M_1$, $M_2$, $M_n$. Line cards $LC_1$, $LC_2$, $LC_n$ are coupled with modem devices $M_1$, $M_2$, $M_n$ via wired connectors 40, 42, 44 for conveying communication signals from wire interface device 16 to customer sector 16. Each modem device $M_n$ is coupled with a respective distribution device $DISTRIB_1$, $DISTRIB_2$, $DISTRIB_n$. The subscript notation "n" is employed here to indicate that there may be any number of modem devices $M_1$, $M_2$, $M_n$ coupled with any number of distribution devices $DISTRIB_1$, $DISTRIB_2$, $DISTRIB_n$ within customer sector 14. Thus, in exemplary communication system 10 in FIG. 1 modem device $M_1$ is coupled with a distribution device $DISTRIB_1$, modem device $M_2$ is coupled with a distribution device $DISTRIB_2$ and modem device $M_n$ is coupled with a distribution device $DISTRIB_n$. Distribution device $DISTRIB_1$ provides communication signals via signal lines 50 to a variety of customer terminal equipment (not shown in FIG. 1) such as personal computers, telephone terminals, fax machines and other terminal equipment. Similarly, distribution device $DISTRIB_2$ provides communication signals via signal lines 52 to a variety of customer terminal equipment (not shown in FIG. 1), and distribution device $DISTRIB_n$ provides communication signals via signal lines 54 to a variety of customer terminal equipment (not shown in FIG. 1).

Customer terminal equipment is also sometimes referred to as customer provided equipment (CPE).

Wired connectors 40, 42, 44 are commonly referred to as communication loops, or subscriber loops or simply as lines. FIG. 1 is a representative schematic diagram that does not illustrate communication system 10 in great detail. For example, a wire interface device 16, such as a DSLAM or channel bank, has a large number of line cards $LC_1$, $LC_2$, $LC_n$ for transceiving communications - data communications or voice communications or both - within communication system 10. Each line card $LC_1$, $LC_2$, $LC_n$ may have one line, two lines, four lines or another number of lines (represented by wired connectors 40, 42, 44 in FIG. 1) between a line card $LC_1$, $LC_2$, $LC_n$ and a connected modem device $M_1$, $M_2$, $M_n$.

An example of a communication system 10 that may advantageously employ the method of the present invention is an asymmetric digital subscriber line (ADSL) communication system. In an ADSL system, each communication loop or line has 255 tones available for coding information (i.e., communication signals) to be provided to or received from to customer sector 14. Signals are coded using quadrature amplitude modulation (QAM), a modulation technique that uses variations in signal vector values - amplitude and direction - to achieve data encoding symbols represented as any of 16 or 32 different states. QAM signals obey the relationship:

$$\text{Signal} = a_i \sin \omega t + b_j \cos \omega t \qquad [1]$$

Where $\omega$ is the frequency of one of the 255 tones,
t = time, and
$a_i$, $b_j$ are constants.

Expression [1] is a very simplified schematic expression for defining QAM data points comprising communication tone-sets that is employed herein for illustrative purposes. A more detailed expression relating to QAM operations is:

$$S(t) = \sum_{i=1}^{255} a_{j,i} \cos(i\omega_o t) + b_{k,i} \sin(i\omega_o t)$$

$$[2]$$

Where $\omega_o$ is the base frequency. Data carried on the ith tone pair of the orthogonal sine and cosine functions I $\omega_o$ is imposed by varying the amplitude of the two functions - sine and cosine. The values of indices $j_{max}$ and $k_{max}$, and the scalar values of the amplitudes $a_{j,i}$ and $b_{k,i}$ associated with these indices, can and do vary with each tone pair.

Quadrature amplitude modulation (QAM) permits generation of data points in constellations. The magnitudes of constants $a_i$, $b_j$ determine the magnitude of a vector determining a data points, the signs of constants $a_i$, $b_j$ determine the quadrant occupied by the vector and the value $\omega t$ determines placement of the vector destination (i.e., direction of the vector) within a given quadrant for determining the data points. The greater the number of data points in a constellation, the greater must be the signal-to-noise ratio (SNR) of the communication system in order that intelligence-bearing signals may be distinguished from noise, and in order that the intelligence borne by the signals can be recovered. That is, there must be an adequate likelihood of discerning a proper data point from a noise signal. If there is more noise, there must be a greater separation among valid data points. Said another way, for a given bit error rate (BER), a denser constellation of data points is more sensitive to noise; a denser constellation requires a higher SNR to achieve a given BER.

The method of the present invention involves assignment of frequencies among communication loops during initialization or training up of a communication system sector. The method is advantageously employed with QAM systems such as the ADSL system briefly described above. Moreover, the method is useful with any communication system, whatever the modulation technique that is employed by the communication system. Thus, for example, the method may be used with systems employing frequency modulation (FM) of a carrier signal, systems employing amplitude modulation (AM) of a carrier signal and communication systems employing other types of modulation.

Training a communication system is a process that is effected when starting up a communication system, as at initial start-up or at start-up following an outage or a maintenance hiatus. Training is disruptive of normal operational employment of a communication loop and is therefore not usually carried out except during such down times. Training takes advantage of a feature of some modems to adjust to extant conditions including, for example, such conditions as amplitude response, delay distortions, timing recovery and echo characteristics of a particular communication loop.

The technique of training, or training up as it is sometimes called, adjusts modems to current communication conditions.

Training may involve a transmitting line card at a wire interface device16 (FIG. 1; in a telephone system central office, for example) sending a special training sequence of coded characters to a receiving modem device $M_1$, $M_2$, $M_n$ at customer premises in a customer sector 14 (FIG. 1). The receiving modem device $M_1$, $M_2$, $M_n$ adjusts to the line conditions experienced during training up.

Training for line drivers, or line cards, is also useful, and is usually carried out while training modems. Training for line cards involves establishing synchrony with customer provided equipment (CPE) at the distal end of the communication loop and then applying an algorithm (i.e., a special sequence of coded characters) to the line to achieve maximum data rate under the extant line conditions.

Continuing with the example of an ADSL communication system with QAM modulation, not all 255 tones available to each line must necessarily be used. Tones that yield too low a signal-to-noise ratio (SNR) may go unused. Another remedy for a too-low SNR may be to assign fewer bits to a particular tone. This may be accomplished by establishing fewer data points in a constellation, such as by providing greater dispersion of data points within a constellation. The term "tone", as used in this ADSL example, refers to a signal described in Expression [1] above and involves selecting a frequency $\omega$ and selecting coefficients $a_i$, $b_j$ to employ in Expression [1] that are appropriate for the extant line conditions. Such choices and decisions are part of the training process. It. is in making decisions regarding choice of operating frequency to be used on a line for conveying information that the method of the present invention is useful. Thus, the method of the present invention is useful in choosing frequency $\omega$ for fashioning tones in an ADSL system, as well as being useful in selecting operating frequencies in communication systems using other modulation techniques.

There are several considerations that must be accommodated in making decisions regarding frequency distribution among communication loops in a communication system. By way of illustration, some of those considerations that apply in the context of an ADSL communication system include:

- Power spectral density (PSD) should be substantially equal across all 255 tones in a line. PSD involves the density of data points in a constellation and is related to frequency $\omega$ and to coefficients $a_i$, $b_j$ in Expression [1] above.

- Once an ADSL line trains up, it cannot decrease its data rate without undergoing another entire retraining sequence or employing a handshaking and synchronization process.

- A retraining sequence may take on the order of 15 - 17 seconds. Such a hiatus in operation of an ADSL line is regarded as "synching up".

- A loss of synchronization, necessitating a retraining process to restore communications, is known as "breaking sync". Breaking synch is a condition that is obvious and disruptive to customers on the line involved; it is a very undesirable condition.

- As one adds line cards to a channel bank or DSLAM, the power level must remain substantially the same and the data rate must remain substantially unchanged for all line cards. The data rates among various line cards can be substantially different because of upper data rate limits imposed by the operating company to reflect the particular service level for which the customer is paying. For example, service having a data rate of 6-Mb costs more than service having a data rate of 1.5-Mb.

- A usual consequence of adding line cards is a degradation of SNR; the SNR decreases. Power level is not usually the primary parameter for change. Parameters are preferably "managed" using the following priority: (1) set a data rate on a line; (2) achieve a desired noise margin (i.e., SNR) on the line; (3) lower power, if possible, to conserve energy. There are usually some measures of safety margins employed in setting each of the parameters; some inefficiency in operation is tolerated in order to avoid an undesired operational hiatus.

- Industry standards must be met. For example, standards relating to ADSL systems establish that tones are to be integral multiples of 4.3125 KHz. Tones at frequencies above approximately 138 KHz are reserved for downstream (central office to customer) communications. Tones below approximately 138 KHz are reserved for upstream (customer to central office) communications.

Noise sources in communication systems are numerous and varied. Noise sources include, for example, environmental noise, appliances or other equipment operating at the customer's premises or at the central office, cross talk between lines and other sources. Cross talk is a phenomenon that occurs most readily between lines that are in close physical proximity operating at similar frequencies, especially high frequencies.

When a modem trains up on a communication line such as an ADSL line (for example), it is conventionally free to use all 255 tones in the training process. However, low frequencies generally experience lesser losses in long loops than losses experienced by higher frequencies in long loops. As a practical consequence, lower frequencies often have a higher signal-to-noise ratio (SNR) than higher frequencies in long loops.

During setting up, or "training" line cards in a channel bank for distributing operating frequencies among communication loops coupled with the channel bank, various frequencies (i.e., high frequencies and low frequencies) are distributed without particular regard to their employment in the network. Training involves determining which tone-sets support communicatons with an acceptable signal-to-noise ratio (SNR) for conditions extant at the time training is carried out.

Training of lines is carried out employing the entire spectrum of tones available. Bits are allocated to a tone pair until the SNR for that tone pair degrades to an unacceptable value. When the bit allocation for a tone pair is completed, one can sum the allocations made to the tone pair to ascertain the data rate for the tone pair. Summing the allocations for all tone pairs on a line yields the data rate for the line. For example, suppose that 100 downstream (i.e., from the central office to the customer) tones are usable and the SNR on all usable tones is the same (an artificiality to keep the example simple). If the extant SNR supports 10 bits on each tone pair and the ADSL system in which the lines are used transmits 4000 symbols per second, then the data rate is 4 Mb (megabits; the term "symbol" is used in this example as synonymous with the term "bit") per second. The conclusion is calculated by multiplying 100 tone pairs by 10 bits per tone pair symbol times 4000 symbols per second.

It is known that attenuation of signals in a twisted pair of wires increases with frequency, and that electromagnetic coupling between adjacent pairs of twisted wires increases with frequency. These two characteristics indicate that that high frequency spectrum is less valuable than low frequency spectrum because high frequency spectrum is most effieciently employed with short loops while low frequency spectrum may be employed with both long loops and short loops. Prior art training algorithms use the entire spectrum that is available (i.e., high frequency and low frequency tones) and seek to assign tone-sets involving the full spectrum to use achieve a desired signal-to-noise ratio (SNR).

A consequence of selecting tone-sets during training substantially with regard for meeting a particular SNR criterion is that low frequency tones may be included in the tone-sets selected without regard to the length of the loop, so that there may be no low frequency tones available for some long lines. Low frequency tones are better able to service long loops than high frequency tones. The prior art practice of focusing substantially on meeting an SNR criterion without regard to whether low frequency tones are used for short loops can (and often does) result in there being fewer low frequency tones available for longer loops that are trained later in the training process. That is, the prior art practice for selecting tone-sets during training results in less-than-efficient employment of the spectrum of frequencies available for a communication distribution network.

The following criteria pertain to recognizing the value of the method of the present invention:

- Higher frequency means higher line loss and more cross-talk.
- Longer loop means higher line losses.
- The highest frequency that can be effectively used on a given communication loop is a function of length of the loop, also referred to as line length.
- The number of tones (in an exemplary ADSL system) required for a particular loop is a function of the data rate to be handled by the loop. A higher data rate requires more frequencies/tones. In other communication systems using other modulation techniques, it is generally true that higher frequencies support higher data rates.

The resulting wisdom to be gleaned from the above criteria is that higher frequencies/tones are ill-suited for long communication loops. The practical result is that higher frequencies are preferably not allocated to longer communication loops. Short communication loops can effectively use both low frequencies/tones and high frequencies/tones; long communication loops cannot effectively use high frequencies/tones and can only effectively use low frequencies/tones. The result is that when a short communication loop is trained and has a lower frequency/tone assigned, the assignment actually constitutes a "waste" of a low frequency/tone that could be used for a longer communication loop.

In recognition of this situation, the present invention provides for reserving lower frequencies/tones for long communication loops. When practicing the method of the present invention, when training modems for long loops one begins by allocating higher frequencies/tones, and when training modems for long loops, one begins by allocating lower frequencies/tones.

Safety margins may be provided by adding a fixed number of tones or range of frequencies for each line trained. Alternate approaches to adding safety margins to lines include estimating or measuring co-channel interference (e.g., cross-talk or other interference) after all lines in a channel bank or DSLAM have been trained. Adjustments to initial allocations may be made by shifting tones or frequencies as necessary to reduce co-channel interference that is estimated or measured.

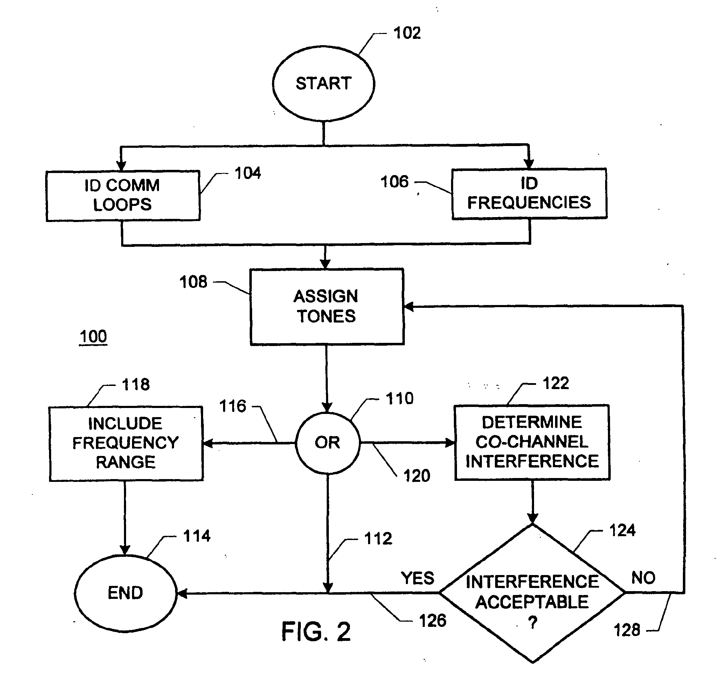

Fig. 2 is a flow diagram illustrating preferred embodiments of the method of the invention. In FIG. 2, a method 100 for distributing operating tones among a plurality of communication loops begins at a start locus 102. Two steps are then carried out in no particular order: One step requires identifying each respective communication loop substantially according to loop length, as indicated by a block 104. The loop identifying ranges between longer loop lengths and shorter loop lengths. Another step requires identifying each respective operating tone to be distributed according to frequency, as indicated by a block 106. The frequency identifying ranges between higher frequencies and lower frequencies.

After steps represented by blocks 104, 106 are completed, method 100 continues by assigning respective operating tones to respective communication loops, as indicated by a block 108. In some communication systems, such as an asymmetric digital subscriber line (ADSL) communication system, assignment of tones is made to respective line drivers that are coupled with respective communication loops. Communication loops having longer loop lengths are assigned respective operating tones with a higher priority from the lower frequencies of the available frequencies. Communication loops having shorter loop lengths are assigned operating tones with a higher priority from higher frequencies of the available frequencies. It is not required that different loops receive different operating tones. A given operating tone may be assigned to more than one respective loop. It is likely that the same or closely similar frequencies will not be assigned to loops that are in close proximity to each other in order to avoid the occurrence of cross-talk or other types of co-channel interference.

Method 100 proceeds to an option juncture 110. Method 100 may proceed from option juncture 110 via an option line 112 directly to end locus 114, thus terminating method 100. Alternatively, method 100 may proceed from option juncture 110 via an option line 116 to a step of including a predetermined frequency range astride each operating tone assigned pursuant to the step of assigning tones represented by block 108. This step of including a predetermined frequency range, represented by a block 118 is one approach to providing a safety margin for the tone assignments effected pursuant to the step of assigning tones represented by block 108. This step of including a predetermined frequency range may be carried out concurrently with performing the step of assigning tones (block 108). Method 100 proceeds from the step of including a predetermined frequency range represented by block 118 to end locus 114, thereby terminating method 100.

According to another alternative, method 100 may proceed from option junction 110 via an option line 120 to a step of determining co-channel interference among the communication loops after completion of the step of tone assignment represented by block 108. This step of determining co-channel interference is represented by a block 122. The determination of co-channel interference may be accomplished by estimation or by measurement. Method 100 proceeds from determining co-channel interference (block 122) to pose a query, "Is the interference acceptable?", as represented by a query block 124. If the response to the query posed by query block 124 is "Yes", then method 100 proceeds via YES response line 126 to end locus 114, thereby terminating method 100.

If the response posed by query block 124 is "No", then method 100 proceeds via NO response line 128 to return to box 108. Pursuant to the step represented by block 108, tones are reassigned to selected of the communication loops. A different methodology for effecting tone assignments may be employed in this iterative practice of method 100 in order to take into account which communication loops were involved in the co-channel interference and the degree of co-channel interference that was determined to exist pursuant to the step represented by block 122. Method 100 then returns to block 122 via option juncture 110 and option line 120. Pursuant to the step represented by block 122, co-channel interference is again determined (estimated or measured) and the query posed by query block 124 is again posed. The iterative loop from query block 124 to block 108 and back to query block 124 is repeated until the response to the query posed by query block 124 is "Yes". When the response to the query posed by query block 124 is "Yes", then method 100 proceeds via YES response line 126 to end locus 114, thereby terminating method 100.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the spirit of the invention which is defined by the following claims:

## Claims

1. A method for distributing a plurality of operating tones among a plurality of line drivers for effecting communications in a plurality of communication loops; respective line drivers of said plurality of line drivers being coupled with at least one respective communication loop of said plurality of communication loops; each respective communication loop of said plurality of communication loops having a respective loop length; the method comprising the steps of:

    (a) in no particular order:

(1) identifying each respective communication loop of said plurality of communication loops substantially according to said loop length; said loop identifying ranging between longer loop lengths and shorter loop lengths; and
(2) identifying each respective operating tone of said plurality of operating tones according to' frequency; said frequency identifying ranging between higher frequencies and lower frequencies; and

(b)assigning respective operating tones of said plurality of operating tones to respective communication loops of said plurality of communication loops via said plurality of line drivers; said longer loop lengths of said plurality of loop lengths being assigned respective operating tones with a higher priority from said lower frequencies; shorter loop lengths of said plurality of loop lengths being assigned respective operating tones with a higher priority from said higher frequencies.

2. A method for distributing a plurality of operating tones among a plurality of line drivers for effecting communications in a plurality of communication loops as recited in Claim 1 wherein the method comprises the further step of:

(c) as said respective operating tones are assigned to said respective communication loops, each said operating tone assignment includes a predetermined frequency range astride said operating tone for providing a frequency isolation margin; said assignment of said operating tone for a respective said communication loop being made using a respective said operating tone outside said frequency isolation margin extant for adjacent said respective communication loops.

3. A method for distributing a plurality of operating tones among a plurality of line drivers for effecting communications in a plurality of communication loops as recited in Claim 1 wherein the method comprises the further steps of:

(c) after said operating tones have been assigned for each said respective communication loop, determining co-channel interference among said respective communication loops;
(d) if said co-channel interference is outside a predetermined limit, reassigning said operating tones among selected communication loops of said respective communication loops to reduce said estimated co-channel interference; and
(e) repeating steps (c) and (d) until said co-channel interference is within said predetermined limit.

4. A method for distributing a plurality of operating tones among a plurality of line drivers for effecting communications in a plurality of communication loops as recited in Claim 3 wherein said estimating co-channel interference is effected by measuring said co-channel interference while imposing at least one test communication signal on selected communication loops of said plurality of communication loops.

5. A method for distributing a plurality of operating tones among a plurality of communication loops; each respective communication loop of said plurality of communication loops having a respective loop length; the method comprising the steps of:

(a) in no particular order:

(1) identifying each respective communication loop of said plurality of communication loops substantially according to said loop length; said loop identifying ranging between longer loop lengths and shorter loop lengths; and
(2) identifying each respective operating tone of said plurality of operating tones according to frequency; said frequency identifying ranging between higher frequencies and lower frequencies; and

(b) assigning respective operating tones of said plurality of operating tones to respective communication loops of said plurality of communication loops; said longer loop lengths of said plurality of loop lengths being assigned respective operating tones from said lower frequencies; shorter loop lengths of said plurality of loop lengths being assigned respective operating tones from said higher frequencies and from said lower frequencies.

6. A method for distributing a plurality of operating tones among a plurality of communication loops as recited in Claim 5 wherein said assigning respective operating tones to said shorter loop lengths is effected with a higher priority from said higher frequencies.

7. A method for distributing a plurality of operating tones among a plurality of communication loops as recited in Claim 5 wherein the method comprises the further step of:

(c) as said respective operating tones are assigned to said respective communication loops, each said operating tone assignment includes a predetermined frequency range astride said operating tone for providing a frequency isolation margin; said assignment of said operating tone for a respective said communication loop being made using a respective said operating tone outside said frequency isolation margin extant for adjacent said respective communication loops.

8. A method for distributing a plurality of operating tones among a plurality of communication loops as recited in Claim 6 wherein the method comprises the further step of:

(c) as said respective operating tones are assigned to said respective communication loops, each said operating tone assignment includes a predetermined frequency range astride said operating tone for providing a frequency isolation margin; said assignment of said operating tone for a respective said communication loop being made using a respective said operating tone outside said frequency isolation margin extant for adjacent said respective communication loops.

9. A method for distributing a plurality of operating tones among a plurality of communication loops as recited in Claim 5 wherein the method comprises the further steps of:

(c) after said operating tones have been assigned for each said respective communication loop, determining co-channel interference among said respective communication loops; and
(d) if said co-channel interference is outside a predetermined limit, reassigning said operating tones among selected communication loops of said respective communication loops to reduce said estimated co-channel interference; and
(e) repeating steps (c) and (d) until said co-channel interference is within said predetermined limit.

10. A method for distributing a plurality of operating tones among a plurality of communication loops as recited in Claim 9 wherein said estimating co-channel interference is effected by measuring said co-channel interference while imposing at least one test communication signal on selected communication loops of said plurality of communication loops.

11. A method for distributing a plurality of operating tones among a plurality of communication loops as recited in Claim 6 wherein the method comprises the further steps of:

(c) after said operating tones have been assigned for each said respective communication loop, determining co-channel interference among said respective communication loops; and
(d) if said co-channel interference is outside a predetermined limit, reassigning said operating tones among selected communication loops of said respective communication loops to reduce said estimated co-channel interference; and
(e) repeating steps (c) and (d) until said co-channel interference is within said predetermined limit.

12. A method for distributing a plurality of operating tones among a plurality of communication loops as recited in Claim 11 wherein said estimating co-channel interference is effected by measuring said co-channel interference while imposing at least one test communication signal on selected communication loops of said plurality of communication loops.

FIG. 1

10

FIG. 2